# EUROPÄISCHE PATENTSCHRIFT

(11) **EP 1 721 842 B1**
(45) Veröffentlichungstag und Bekanntmachung des Hinweises auf die Patenterteilung: **13.12.2006**
(21) Anmeldenummer: 05010112.0
(22) Anmeldetag: 10.05.2005
(51) Int. Cl.: B65G 15/32, B65G 15/54

(54) **Transportband, Kühl-und Heizvorrichtung für ein solches Transportband sowie Verfahren zur Herstellung von Produkten mittels eines Transportbandes**
Conveyor belt, cooling and heating device for such a conveyor belt and method for producing products by means of a conveyor belt
Convoyeur à bande, dispositif de refroidissement et de chauffage pour un tel convoyeur à bande et procédé pour la production de produits au moyen d'un convoyeur à bande

(43) Veröffentlichungstag der Anmeldung: 15.11.2006
(73) Patentinhaber: Heimbach GmbH & Co. KG, 52353 Düren (DE)
(72) Erfinder: Kaldenhoff, Ralf, Dr., 52072 Aachen (DE); Walther, Werner, 4721 Neu-Moresnet (BE)
(74) Vertreter: Paul, Dieter-Alfred

(56) Entgegenhaltungen:
- DE-C1- 3 902 957
- FR-A- 2 483 745
- GB-A- 1 445 567
- US-A- 4 205 536
- US-A- 4 637 511

## Beschreibung

Die Erfindung betrifft ein Transportband als oder für eine Kühl- oder Heizvorrichtung gemäss dem Oberbegriff des Anspruchs 1. Sie bezieht sich des weiteren auf eine Kühlvorrichtung und eine Heizvorrichtung gemäss den Oberbegriffen der Ansprüche 32 und 34. Die Erfindung betrifft schließlich auch ein Verfahren zur Herstellung von Produkten mittels eines Transportbandes gemäss dem Oberbegriff des Anspruchs 37.

Es gibt eine Vielzahl von Produkten, die in kleinteiliger, insbesondere pastillenartiger Form hergestellt werden. Hierzu zählen Lebens- oder Genußmittel, wie beispielsweise Schokoladen, Zuckerwaren, Käse, Gelatine, Granalien, Fette oder dergleichen, aber auch Futtermittel. In dieser Form lassen sich auch chemische Produkte, wie Arzneimittel, Pillen, Harze, Harnstoffe, Schwefel, Additive, Wachse etc., herstellen. Die Herstellung erfolgt in Vorrichtungen, die aus einer Portioniereinrichtung und einer Transporteinrichtung bestehen. Beispiele hierfür sind der DE-C-39 02 957, DE-C-40 13 405 und EP-B 0 244 849 zu entnehmen. In der Portioniereinrichtung wird das geschmolzene Produktmaterial derart portioniert, daß es in Form von Massetropfen austritt und auf ein Transportband auftrifft. Das Transportband befördert die auf diese Weise portionierten Massetropfen über eine bestimmte Strecke und wirft sie dann an einer Umlenkwalze nach unten in einen Sammeltrog ab. Während des Transportes kühlen die Portionen aufgrund von Konvektion und Wärmeabgabe an das Transportband soweit ab, dass sie beim Abfallen vom Transportband nicht mehr klebfähig sind und eine gewisse Eigenstabilität erreicht haben.

Im Stand der Technik werden in solchen Vorrichtungen Transportbänder aus Stahl eingesetzt. Diese Transportbänder führen zwar die Wärme aufgrund ihrer guten Wärmeleitfähigkeit wirksam ab. Ihre Montage ist jedoch nicht einfach. Die kleineren Transportbänder werden endlos geliefert. Bei ihrem Einbau muß deshalb die Vorrichtung teilweise demontiert werden. Größere Transportbänder werden zwar mit endlicher Länge geliefert. Die Verbindung ihrer Stirnkanten geschieht durch Verschweißen innerhalb der Maschine, was sehr aufwendig ist. Ein weiterer Nachteil von aus Stahl bestehenden Transportbändern besteht darin, dass die Umlenkwalzen große Durchmesser haben müssen, weil ansonsten Risse in dem Transportband auftreten. Schließlich haben solche Bänder eine glatte, oft polierte Oberfläche, auf der die abgelegten Portionen ihre Form nicht beibehalten, sondern an der Berührungsfläche abplatten und anhaften. Das Abwerfen von dem Transportband muß dann durch Schaber unterstützt werden, worunter die Gestalt der Portionen leidet. Ein Transportband gemäss dem Oberbegriff des Anspruchs 1 ist aus der US-A-4 637 511 bekannt. Eine Kühlvorrichtung gemäss dem Oberbegriff des Anspruchs 32 ist aus der US-A-4 205 536 bekannt. Eine Heizvorrichtung gemäss dem Oberbegriff des Anspruchs 34 ist aus der FR-A-2 483 745 bekannt. Ein Verfahren zur Herstellung von Produkten gemäss dem Oberbegriff des Anspruchs 37 ist aus der DE-C-39 02 957 bekannt.

Der Erfindung liegt die Aufgabe zugrunde, ein Transportband der eingangs genannten Art so auszubilden, dass es trotz guter Wärmeleitfähigkeit sehr flexibel ist, ein Anhaften weitgehend vermeidet und eine einfachere Montage zuläßt. Eine weitere Aufgabe besteht darin, eine Kühl-und Heizvorrichtung unter Verwendung des Transportbandes zu konzipieren. Eine dritte Aufgabe ist darin zu sehen, ein Verfahren zur Herstellung von Produkten unter Verwendung des Transportbandes bereitzustellen.

Die erste Aufgabe wird erfindungsgemäß durch die im Anspruch 1 angegebenen Merkmale gelöst. Grundgedanke der Erfindung ist es also, ein Transportband bereitzustellen, das im wesentlichen aus einem in eine Kunststoffmatrix eingebetteten textilen Träger besteht, der Wärmeleitfäden mit guter Wärmeleitfähigkeit aufweist. Ein solches Transportband zeichnet sich durch hohe Flexibilität aus und kann deshalb auch über Umlenkwalzen mit kleinen Durchmessern geführt werden. Hierdurch können die zugehörigen Vorrichtungen kleiner und kostengünstiger hergestellt werden. Die Matrix aus dem Kunststoffmaterial hat im Vergleich zu Stahl eine antiadhäsive Oberfläche, die Formänderungen wie die Bildung von Abplattungen bei den Portionen gering hält und deren Abwerfen unterstützt.

Die benötigte Wärmeleitfähigkeit kann in weiten Grenzen durch die Anzahl der im textilen Träger vorhandenen Wärmeleitfäden an die jeweiligen Erfordernisse angepaßt werden, und zwar bis hin dazu, dass der Träger vollständig aus Wärmeleitfäden hergestellt wird. Sofern die Wärmeleitfäden bis zu den Oberflächen der Matrix auf beiden Außenseiten des Transportbandes gehen, ist es zweckmäßig, dass sie einen solchen Verlauf haben, dass sie entweder direkt oder über Kontakt mit anderen Wärmeleitfäden eine Wärmeübertragung von einer Außenseite des Transportbandes zur anderen Außenseite bewirken, so dass die abgeführte Wärme beispielsweise an die Umlenkwalzen der Vorrichtung abgegeben werden kann.

Sofern eine glatte oder nur wenig strukturierte Oberfläche insbesondere auf der Außenseite des Transportbandes gewünscht ist, sollten die Wärmeleitfäden nicht oder nicht wesentlich über die Oberfläche der Matrix vorstehen, also mit ihr im wesentlichen bündig in dieser Oberfläche liegen. Es kann jedoch auch vorgesehen sein, dass die Dicke der Matrix geringer ist als die des Trägers und dass Wärmeleitfäden auf zumindest einer Außenseite, im Bedarfsfall auch auf beiden Außenseiten, über die Matrix vorstehen, aus ihr also nicht unwesentlich herausragen.

Nach der Erfindung ist ferner vorgesehen, dass der textile Träger derart ausgebildet ist, dass die in ihm enthaltenen Wärmeleitfäden zwischen den Außenseiten des Bandes hin- und herwechseln. Dabei sollten Wärmeleitfäden an der bzw. den Außenseiten des Transportbandes, wo sie bis wenigstens zur Oberfläche der Matrix gehen, zehn bis vierzig, vorzugsweise fünfzehn bis dreißig Kontaktpunkte pro Quadratzentimeter bilden, wobei deren Flächen jeweils 15 bis 30% der jeweiligen Oberfläche des Transportbandes einnehmen. Bei diesen Werten ist eine sehr gute Wärmeleitfähigkeit in Dickenrichtung gewährleistet.

Die Wärmeleitfäden bestehen zweckmäßigerweise zumindest zum Teil aus Metallen, z.B. Kupfer, Messing, Aluminium, Silber oder aus Legierungen davon, aber auch aus Kohlenstoff und/oder aus Kombinationen aus Metall und Kohlenstoff. Durch die Wahl des Materials für die Wärmeleitfäden kann ebenso wie durch deren Anzahl, Dicke und Anordnung die Wärmeleitfähigkeit eines Transportbandes in Dikkenrichtung optimal an die jeweiligen Anforderungen angepaßt werden.

In Sonderheit können die Wärmeleitfäden einen Seelenfaden aufweisen, der von wenigstens einem Draht oder Bändchen umwickelt ist oder um den Drähte oder Bändchen verseilt sind, die aus einem Material bestehen, dessen spezifische Wärmeleitfähigkeit größer ist als die des Seelenfadens.

Es versteht sich, dass der Träger vollständig aus Wärmeleitfäden bestehen kann, also beispielsweise aus einem reinen Metallgewebe. Alternativ dazu besteht die Möglichkeit, neben den Wärmeleitfäden weitere Fäden vorzusehen, deren spezifische Wärmeleitfähigkeit geringer ist als die der Wärmeleitfäden. Hierbei kann es sich um Kunststoffäden handeln, die vorzugsweise eine Temperaturbeständigkeit von mindestens 200°C haben. Hierfür kommen insbesondere aromatische Polyamide (Aramide) in Frage.

Die Fäden, aus denen der textile Träger hergestellt ist, können als monofile, multifile oder geflochtene Fäden, Fasergarne, Litzen, Kabel, Bändchen, Zwirne, texturierte Garne und/oder gebundene Garne ausgebildet sein. Der Träger selbst ist vorzugsweise als zusammenhängendes textiles Flächengebilde ausgebildet, wobei in erster Linie die Ausbildung als Gewebe in Frage kommt. Aber auch andere textile Fadengebilde bieten sich an, beispielsweise Gewirke, Gestricke, Fadengelege, Abstandsgewebe oder -gewirke. Soweit der Träger als Gewebe ausgebildet ist, hat es sich als vorteilhaft erwiesen, wenn die Schußfäden im wesentlichen gerade verlaufen und die Kettfäden außen vorstehende Kröpfungen bilden und diese zumindest teilweise als Wärmeleitfäden ausgebildet sind. Über den Durchmesser der Kett- und Schußfäden kann die Höhe der Kröpfungen der Kettfäden eingestellt werden. Es versteht sich, dass die Wärmeleitfähigkeit des Transportbandes in Dickenrichtung durch die Art der Gewebebindung und durch die Fadendichte bestimmt werden kann. Dabei können auch mehrlagige Gewebe zum Einsatz kommen.

Nach einem weiteren Merkmal der Erfindung ist vorgesehen, dass in der Matrix Wärmeleitteilchen verteilt sind, deren spezifische Wärmeleitfähigkeit höher ist als die des Kunststoffmaterials. Hierbei kann es sich um Pulver und/oder Fasern handeln, die aus den schon oben genannten Materialien für die Wärmeleitfäden bestehen.

Ferner besteht die Möglichkeit, in die Matrix Füllmaterialien einzulagern, deren spezifisches Gewicht geringer ist als das des Kunststoffmaterials, um auf diese Weise das Gewicht des Transportbandes zu beeinflussen. Als Füllmaterialien kommen beispielsweise Gasblasen in Frage, so dass die Matrix Schaumcharakter hat. Es können aber auch Pulver und/oder Mikrokugeln eingelagert werden. Der Anteil aus gegebenenfalls vorhandenen Füllmaterialien und vorhandenen Wärmeleitteilchen kann 10 bis 60 Gew.-% der Matrix ausmachen.

Das Kunststoffmaterial ist zweckmäßigerweise bis mindestens 200°C beständig. Hierbei kann es sich beispielsweise um ein Elastomer handeln. In Frage kommen Silikonelastomere, Fluorelastomere und/oder Fluorsilikonelastomore. Statt dessen kann aber auch ein Harz vorgesehen sein, beispielsweise Silikonharz, Polyurethanharz oder ein elastisches Polyacrylat. Vorzugsweise sollte die Matrix den Träger lückenlos ausfüllen.

Die Matrix kann 15 bis 40 Gew.-% des Gewichts des Transportbandes insgesamt bilden. Besonders zweckmäßig haben sich Werte zwischen 20 bis 30 Gew.-% erwiesen. Die Dicke des Bandes kann je nach Einsatzzweck zwischen 0,75 bis 3 mm liegen.

In bevorzugter Ausführung ist das Transportband nicht endlos, d.h. geschlossen, sondern an zumindest einer Stelle unter Bildung von Stirnkanten quergeteilt, die über eine Kupplungseinrichtung verbindbar sind. Auf diese Weise kann das Transportband bequem in die zugehörige Vorrichtung eingelegt und dann in der Vorrichtung geschlossen werden. Besonders zweckmäßig ist eine sogenannte Steckdrahtnaht als Kupplungseinrichtung. Bei dieser Naht werden an den Stirnkanten des Transportbandes eine Vielzahl von Kupplungsösen ausgebildet, die beim Schließen des Transportbandes in Überlappung gebracht werden, so dass im Überlappungsbereich ein Durchgangskanal entsteht, durch den ein Kupplungsdraht eingeschoben werden kann. Solche Steckdrahtnähte sind beispielsweise als Clippernähte bekannt. Die Kupplungsösen können aber auch durch zwei Drahtwendeln gebildet werden, von denen jeweils eine in eine Stirnkante des Transportbandes eingesetzt wird und die zum Verbinden der Stirnkanten in Überlappung gebracht werden.

Gegenstand der Erfindung ist auch eine Kühlvorrichtung nach dem Anspruch 32. Diese Kühlvorrichtung weist zumindest eine Kühleinrichtung zur Kühlung des Transportbandes auf. Diese Kühleinrichtung kann beispielsweise durch eine Kühlwalze gebildet werden, über die das Transportband geführt wird und die über Kühlmittel kühlbar ist. Statt dessen kann beispielsweise auch ein Kühlbad vorgesehen sein, durch das das Transportband geleitet wird. Auch andere Kühleinrichtungen sind denkbar, um die Aufheizung des Transportbandes zu vermeiden und den abgelegten Produkten eine kühle Oberfläche anzubieten.

Das erfindungsgemäße Transportband des Anspruchs 1 eignet sich aber auch für Heizvorrichtungen, um auf das Transportband abgelegte Güter, z.B. Nahrungsmittel, warm zu halten oder zu erhitzen. Hierzu sollte die Heizvorrichtung im Bereich des umlaufenden Transportbandes einer Heizeinrichtung zu dessen Aufheizung aufweisen. Die Heizeinrichtung kann beispielsweise als Induktionsspule oder Infrarotstrahler ausgebildet sein. Das Transportband kann aber auch durch ein entsprechend aufgewärmtes Bad geführt werden. Beim Einsatz des Transportbandes in solchen Heizvorrichtungen ist es zweckmäßig, die Wärmeleitfäden nur bis zur Oberfläche auf derjenigen Außenseite gehen zu lassen, die für die Auflage des zu transportierenden Gutes vorgesehen ist, während die andere Seite, die gewöhnlich den Umlenkwalzen zugewandt ist, mit Matrixmaterial geschlossen ist, dort also keine Wärmeleitfäden bis zur Oberfläche gehen.

Die dritte Aufgabe wird erfindungsgemäß durch ein Verfahren nach dem Anspruch 37 gelöst, bei dem Produktmaterial verflüssigt und mittels einer Auftragseinrichtung auf das erfindungsgemäße Transportband abgelegt und von diesem dann als Produkt entfernt wird. In an sich bekannter Weise kann die Ablage des Produktmaterials in vereinzelten Portionen, aber auch in Strangform geschehen. Bei letzterer Ablageform kann später eine Vereinzelung in Portionen endlicher Länge vorgenommen werden.

Schließlich besteht auch die Möglichkeit, das Produktmaterial - beispielsweise mittels entsprechend gestalteter, breiter Düsen - in Schichtform auf das Transportband abzulegen, um auf diese Weise Folien, auch filmartige Folien, herzustellen. Auf dem Transportband kühlt das Produktmaterial soweit ab, dass es am Ende des Transportbandes von dem Transportband abgenommen und dann entweder aufgerollt oder an eine weitere Station zum Zwecke der Weiterverarbeitung übergeben werden kann.

In der Zeichnung ist die Erfindung anhand eines Ausführungsbeispiels näher veranschaulicht. Es zeigen:
- Figur 1: eine Vorrichtung zur Herstellung von Pastillen in der Seitenansicht und
- Figur 2: einen Querschnitt durch das Transportband der Vorrichtung gemäß Figur 1.

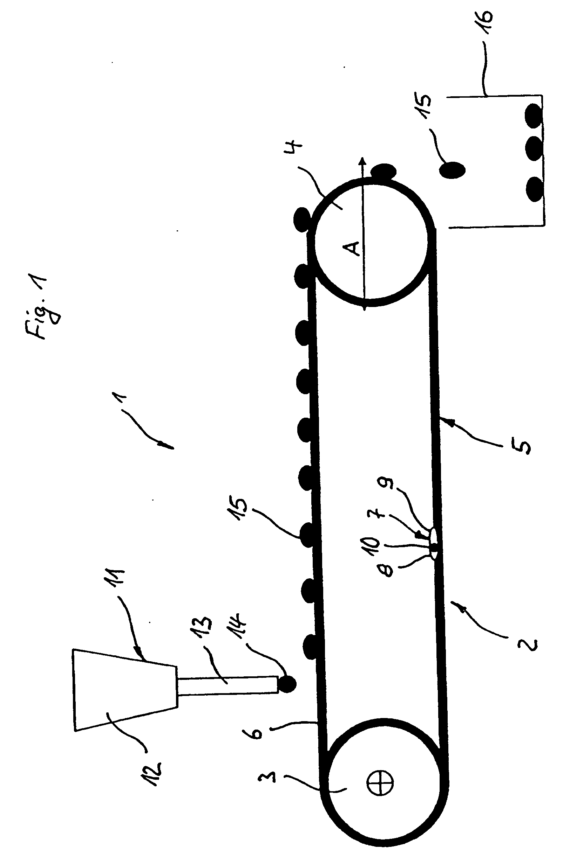

Die in Figur 1 dargestellte Vorrichtung 1 weist eine Transporteinrichtung 2 auf. Sie hat zwei im horizontalen Abstand angeordnete Transportwalzen 3, 4 mit sich senkrecht zur Zeichnungsebene erstreckenden Drehachsen, wobei die linke Transportwalze 3 im Uhrzeigersinn angetrieben ist und die rechte Transportwalze 4 im gleichen Drehsinn mitläuft. Auf die Transportwalzen 3, 4 ist ein Transportband 5 aufgezogen, dessen Obertrum 6 aufgrund der Drehrichtung der Transportwalzen 3, 4 in Richtung des Pfeils A bewegt wird.

Das Transportband 5 hat eine endliche Länge. Es ist durch eine Kupplungseinrichtung 7 zu einem Endlosband geschlossen. Die Kupplungseinrichtung 7 ist als Clippernaht ausgebildet. Hierzu sind an jeder Stirnkante eine Vielzahl von nebeneinander angeordneten Clipperhaken 8, 9 befestigt, die zum Schließen der Kupplungseinrichtung 7 in eine solche Überlappung gebracht worden sind, dass sich im Überlappungsbereich ein sich quer zur Laufrichtung des Transportbandes 5 erstreckender Durchgangskanal ergibt. In diesem Durchgangskanal ist ein Kupplungsdraht 10 eingeschoben, der sich über die gesamte Länge der Stirnkanten erstreckt und die Clipperhaken 8, 9 und damit die Stirnkanten des Transportbandes 5 scharnierartig miteinander verbindet. Mit Hilfe dieser Kupplungseinrichtung 7 kann das Transportband 5 in nicht gekuppeltem Zustand einfach um die Transportwalzen 3, 4 herumgelegt werden. Dann werden die Clipperhaken 8, 9 in Überlappung gebracht und der Kupplungsdraht 10 eingeschoben. Zur Demontage wird lediglich der Kupplungsdraht 10 herausgezogen.

Oberhalb des Obertrums 6 und in kurzem Abstand hinter der linken Transportwalze 3 befindet sich eine Portioniereinrichtung 11, wie sie im Stand der Technik, z.B. aus der DE-C-39 02 957, DE-C-40 13 405 und EP-B-0 244 849, bekannt ist. Sie hat einen Trichter 12 und ein Fallrohr 13. In dem Trichter 12 wird geschmolzene Pastillenmasse vorgehalten, die dann über das Fallrohr 13 portionsweise, d.h. in Form von Massetropfen 14 auf das Obertrum 6 des Transportbandes 5 abgelegt werden.

Auf dem Transportband 5 formen sich aus den Massetropfen 14 aufgrund ihres Eigengewichts und ihrer Plastizität Pastillen - beispielhaft mit 15 bezeichnet - in ihrer typischen Ovalform. Sie werden mit dem Obertrum 6 in Richtung des Pfeils A transportiert und geben dabei Wärme an das Transportband 5 und an die Umgebungsluft ab. Die Umlaufgeschwindigkeit des Transportbandes 5 und die Länge des Obertrums 6 sind so ausgelegt, dass die Pastillen 15 bei Erreichen der rechte Transportwalze 4 eine ausreichende Formbeständigkeit erreicht haben, um dort von dem Transportband 5 abgeworfen zu werden. Sie fallen dort in einen Sammeltrog 16 unterhalb der rechten Transportwalze 4 und können dort durch Wärmeabgabe weiter aushärten.

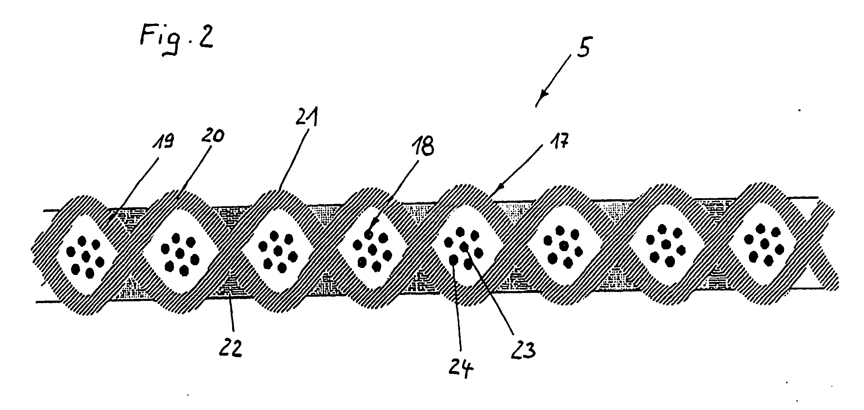

Aus Figur 2 läßt sich der nähere Aufbau des erfindungsgemäßen Transportbandes 5 ersehen. Es weist einen textilen Träger 17 auf, der als Gewebe in Leinwandbindung ausgebildet ist. Der Träger 17 hat senkrecht zur Zeichnungsebene und im wesentlichen gerade verlaufende Schußfäden, beispielhaft mit 18 bezeichnet. Die Schußfäden 18 sind eingebunden in Kettfäden 19, 20, die zwischen den Schußfäden 18 die Seiten des Transportbandes 5 wechseln und jeweils ober- und unterhalb der Schußfäden 18 Kröpfungen - beispielhaft mit 21 bezeichnet - ausbilden.

Der Träger 17 ist in einer Matrix 22 aus Silikonelastomer eingebettet. Die Dicke der Matrix 22 ist in diesem Fall etwas geringer als die Dicke des Trägers 17, welche durch die Kettfäden 19, 20 vorgegeben wird. Aus diesem Grund stehen deren Kröpfungen 21 etwas über die Oberflächen der Matrix 22 vor. Es versteht sich, dass die Dicke der Matrix 22 auch so gewählt werden kann, dass die Oberseiten der Kröpfungen 21 bündig mit den Oberflächen der Matrix 22 zu liegen kommen.

Die Kettfäden 19, 20 bestehen aus Metallfäden und bilden deshalb Wärmeleitfäden mit hoher spezifischer Wärmeleitfähigkeit. Über ihre Kröpfungen 21 haben die Kettfäden 19, 20 direkten Kontakt mit den auf die Außenseite des Transportbandes 5 aufgelegten Pastillen 15 (Figur 1) und nehmen deshalb deren Wärme wirksam auf und leiten sie auf die andere Seite des Transportbandes. Über die dortigen Kröpfungen 21 der Kettfäden 19, 20 geben sie die Wärme an die Oberflächen der Transportwalzen 3, 4 ab. Dies kann zusätzlich dadurch gefördert werden, dass in die Matrix 22 Wärmeleitteilchen aus Metall oder Kohlenstoff eingelagert werden.

Die Schußfäden 18 weisen jeweils einen Seelenfaden 23 aus einem aromatischen Polyamid auf, um den Metalldrähte - beispielhaft mit 24 bezeichnet - gewickelt sind. Auf diese Weise tragen auch die Schußfäden 18 dazu bei, die von den aufgelegten Pastillen 15 an die Kettfäden 19, 20 abgegebene Wärme zur anderen Seite des Transportbandes 5 zu leiten.

Die Vorrichtung 1 kann zusätzlich mit einer Kühleinrichtung versehen sein, über die das Transportband 5 gekühlt wird. Dies kann beispielsweise dadurch geschehen, dass eine der beiden Kühlwalzen 3, 4 mit einem Kühlmittel beaufschlagt wird, so dass dessen Mantelseite und damit das darüber laufende Transportband 5 gekühlt werden.

## Patentansprüche

1. Transportband (5) als oder für eine Kühl- oder Heizvorrichtung (1), wobei dass Transportband (5) einen textilen Träger (17) mit Fäden aufweist, von denen wenigstens ein Teil Wärmeleitfäden (18, 19, 20) bilden, **dadurch gekennzeichnet, dass** der Träger in einer Matrix (22) aus einem Kunststoffmaterial derart eingebettet ist, dass Wärmeleitfäden (19, 20) wenigstens bis zur Oberfläche der Matrix (22) auf zumindest einer Außenseite gehen, wobei die spezifische wärmeleitfähigkeit der Wärmeleitfäden (19, 20) höher ist als die des Kunststoffmaterials.

2. Transportband nach Anspruch 1, **dadurch gekennzeichnet, dass** Wärmeleitfäden (19, 20) bis zu den Oberflächen auf beiden Außenseiten gehen und entweder direkt oder über Kontakt mit anderen Wärmeleitfäden (18) eine Wärmeübertragung von einer Außenseite des Transportbandes (5) zur anderen Außenseite bewirken.

3. Transportband nach Anspruch 1 oder 2, **dadurch gekennzeichnet, dass** die Wärmeleitfäden (19, 20), die bis zur Oberfläche bzw. den Oberflächen der Matrix (22) gehen, bündig zu der jeweiligen Oberfläche liegen.

4. Transportband nach Anspruch 1 oder 2, **dadurch gekennzeichnet, dass** die Dicke der Matrix (22) geringer ist als die des Trägers (17) und dass Wärmeleitfäden (19, 20) auf zumindest einer Außenseite über die Matrix (22) vorstehen.

5. Transportband nach einem der Ansprüche 1 bis 4, **dadurch gekennzeichnet, dass** Wärmeleitfäden (19, 20) zwischen den Außenseiten des Transportbandes (5) hin- und herwechseln. '

6. Transportband nach einem der Ansprüche 1 bis 5, **dadurch gekennzeichnet, dass** Wärmeleitfäden (19, 20) an der bzw. den Außenseiten des Transportbandes (5) bis 40, vorzugsweise 15 bis 30 Kontaktpunkte/cm² bilden.

7. Transportband nach einem der Ansprüche 1 bis 6, **dadurch gekennzeichnet, dass** Wärmeleitfäden (19, 20) an den Außenseiten des Transportbandes (5) Kontaktpunkte bilden, deren Flächen jeweils 15 bis 30 % der jeweiligen Oberfläche des Transportbandes (5) einnehmen.

8. Band nach einem der Ansprüche 1 bis 7, **dadurch gekennzeichnet, dass** Wärmeleitfäden (18, 19, 20) zumindest teilweise aus Metallen, z. B. Kupfer, Messing, Aluminium, Silber oder aus Legierungen davon, aus Kohlenstoff und/oder aus Kombinationen aus Metall und Kohlenstoff bestehen.

9. Transportband nach einem der Ansprüche 1 bis 8, **dadurch gekennzeichnet, dass** Wärmeleitfäden (18) einen Seelenfaden (23) aufweisen, der von wenigstens einem Draht (24) oder Bändchen umwickelt ist oder um den Drähte oder Bändchen verseilt sind, die aus einem Material bestehen, dessen spezifische Wärmeleitfähigkeit größer ist als die des Seelenfadens (23).

10. Transportband nach einem der Ansprüche 1 bis 9, **dadurch gekennzeichnet, dass** der Träger (17) aus Wärmeleitfäden (18, 19, 20) besteht.

11. Transportband nach einem der Ansprüche 1 bis 10, **dadurch gekennzeichnet, dass** neben den Wärmeleitfäden weitere Fäden vorhanden sind, deren spezifische Wärmeleitfähigkeit geringer ist als die der Wärmeleitfäden.

12. Transportband nach Anspruch 11, **dadurch gekennzeichnet, dass** die weiteren Fäden Kunststoffäden bilden, die eine Temperaturbeständigkeit von mindestens 200°C haben.

13. Transportband nach einem der Ansprüche 1 bis 12, **dadurch gekennzeichnet, dass** die Fäden (18, 19, 20) als Monofile, Multifile, geflochtene Fäden, Fasergarne, Litzen, Kabel, Bändchen, Zwirne, texturierte Garne und/oder gebundene Garne ausgebildet sind.

14. Transportband nach einem der Ansprüche 1 bis 13, **dadurch gekennzeichnet, dass** der Träger (17) als Gewebe, Gewirke, Gestricke, Fadengelege, Abstandsgewebe oder -gewirke ausgebildet ist.

15. Transportband nach einem der Ansprüche 1 bis 14, **dadurch gekennzeichnet, dass** der Träger (17) als Gewebe ausgebildet ist, bei dem Schußfäden (18) im wesentlichen gerade verlaufen und die Kettfäden (19, 20) außen vorstehende Kröpfungen (21) bilden und die Kettfäden (19, 20) zumindest teilweise als Wärmeleitfäden ausgebildet sind.

16. Transportband nach Anspruch 15, **dadurch gekennzeichnet, dass** die Schußfäden (18) in zumindest einer Lage vorliegen.

17. Transportband nach einem der Ansprüche 1 bis 16, **dadurch gekennzeichnet, dass** in der Matrix (22) Wärmeleitteilchen verteilt sind, deren spezifische Wärmeleitfähigkeit höher ist als die des Kunststoffmaterials.

18. Transportband nach Anspruch 17, **dadurch gekennzeichnet, dass** die Wärmeleitteilchen als Pulver und/oder als Fasern ausgebildet sind.

19. Transportband nach einem der Ansprüche 1 bis 18, **dadurch gekennzeichnet, dass** in der Matrix (22) Füllmaterialien verteilt sind, deren spezifisches Gewicht geringer ist als die des Kunststoffmaterials.

20. Transportband nach Anspruch 19, **dadurch gekennzeichnet, dass** die Füllmaterialien aus Gasblasen, Pulver und/oder Mikrokugeln bestehen.

21. Transportband nach einem der Ansprüche 19 bis 20, **dadurch gekennzeichnet, dass** der Anteil aus ggf. vorhandenen Füllmaterialien und ggf. vorhandenen wärmeleitteilchen 10 bis 60 Gew.-% des Gewichts der Matrix (17) ausmacht.

22. Transportband nach einem der Ansprüche 1 bis 21, **dadurch gekennzeichnet, dass** das Kunststoffmaterial bis mindestens 200°C beständig ist.

23. Transportband nach einem der Ansprüche 1 bis 22, **dadurch gekennzeichnet, dass** das Kunststoffmaterial ein Elastomer ist.

24. Transportband nach Anspruch 23, **dadurch gekennzeichnet, dass** das Elastomer ein Silikonelastomer, Fluorelastomer und/oder Fluorsilikonelastomer ist.

25. Transportband nach einem der Ansprüche 1 bis 24, **dadurch gekennzeichnet, dass** das Kunststoffmaterial ein Harz ist.

26. Transportband nach Anspruch 25, **dadurch gekennzeichnet, dass** das Harz ein Silikonharz, Fluorsilikonharz, Polyurethanharz oder ein elastisches Polyacrylat ist.

27. Transportband nach einem der Ansprüche 1 bis 26, **dadurch gekennzeichnet, dass** die Matrix (22) den Träger (17) lückenlos ausfüllt.

28. Transportband nach einem der Ansprüche 1 bis 27, **dadurch gekennzeichnet, dass** die Matrix (22) 15 bis 40 Gew.-% des Gewichts des Transportbandes (5) bildet, vorzugsweise 20 bis 30 Gew.-%.

29. Transportband nach einem der Ansprüche 1 bis 28, **dadurch gekennzeichnet, dass** die Dicke des Transportbandes 0,75 bis 3 mm beträgt.

30. Transportband nach Anspruch 1 bis 29, **dadurch gekennzeichnet, dass** das Transportband (5) an zumindest einer Stelle unter Bildung von Stirnkanten geteilt ist und die Stirnkanten über eine Kupplungseinrichtung (7) verbindbar sind.

31. Transportband nach Anspruch 30, **dadurch gekennzeichnet, dass** die Kupplungseinrichtung (7) als Steckdrahtnaht ausgebildet ist.

32. Kühlvorrichtung (1) mit einem Transportband, wobei die Kühlvorrichtung (1) im Bereich des umlaufenden Transportbandes (5) eine Kühleinrichtung zu dessen Kühlung aufweist, **dadurch gekennzeichnet, dass** das Transportband nach einem der Ansprüche 1 bis 30 ausgebildet ist.

33. Kühlvorrichtung nach Anspruch 32, **dadurch gekennzeichnet, dass** die Kühleinrichtung eine Kühlwalze aufweist, über die das Transportband geführt ist und die über ein Kühlmittel kühlbar ist.

34. Heizvorrichtung mit einem Transportband, wobei die Heizvorrichtung im Bereich des umlaufenden Transportbandes (5) eine Heizeinrichtung zu dessen Aufheizung aufweist, **dadurch gekennzeichnet, dass** das Transportband nach einem der Ansprüche 1 bis 31 ausgebildet ist.

35. Heizvorrichtung nach Anspruch 34, **dadurch gekennzeichnet, dass** die Heizeinrichtung eine Induktionsspule aufweist.

36. Heizvorrichtung nach Anspruch 35, **dadurch gekennzeichnet, dass** die Heizeinrichtung einen Infrarotstrahler aufweist.

37. Verfahren zur Herstellung von Produkten (15), bei dem Produktmaterial (14) verflüssigt und mittels einer Auftrageseinrichtung (11) auf ein Transportband (5) abgelegt und von diesem dann als Produkt (15) entfernt wird, **dadurch gekennzeichnet, dass** das Produktmaterial (14) auf ein Transportband (5) nach einem der Ansprüche 1 bis 31 abgelegt wird.

38. Verfahren nach Anspruch 37, **dadurch gekennzeichnet, dass** das Produktmaterial (14) in vereinzelten Portionen abgelegt wird.

39. Verfahren nach Anspruch 37, **dadurch gekennzeichnet, dass** das Produktmaterial in Strangform abgelegt wird.

40. Verfahren nach Anspruch 37, **dadurch gekennzeichnet, dass** das Produktmaterial in Schichtform abgelegt wird.

41. Verfahren nach Anspruch 40, **dadurch gekennzeichnet, dass** das Produkt als Folie von dem Transportband (5) abgenommen und entweder aufgerollt oder an eine weitere Station übergeben wird.

## Claims

1. Conveyor belt (5) as or for a cooling and heating device (1), in which the conveyor belt (5) has a textile strap (17) with filaments of which at least one part form heat conducting filaments (18, 19, 20), **characterised in that** the strap is embedded in a matrix (22) of plastic material in such a manner that heat conducting filaments (19, 20) extend at least as far as the surface of the matrix (22) on at least one outer side, in which the specific heat conductivity of the heat conducting filaments (19, 20) is higher than that of the plastic material.

2. Conveyor belt in accordance with claim 1, **characterised in that** the heat conducting filaments (19, 20) extend at least as far as the surfaces of both outer sides and cause a heat transfer from an outer side of the conveyor belt (5) to the other outer side either directly or through contact with other heat conducting filaments.

3. Conveyor belt in accordance with claim 1 or 2, **characterised in that** the heat conducting filaments (19, 20), which reach the surface or surfaces respectively of the matrix (22) are flush with the respective surface.

4. Conveyor belt in accordance with claim 1 or 2, **characterised in that** the thickness of the matrix (22) is smaller than that of the strap (17) and that heat conducting filaments (19, 20) project above the matrix (22) on at least one outer side.

5. Conveyor belt in accordance with claim 1 to 4, **characterised in that** heat conducting filaments (19, 20) alternate between the outer sides of the conveyor belt (5).

6. Conveyor belt in accordance with one of claims 1 to 5, **characterised in that** heat conducting filaments (19, 20) form up to 40, and preferably 15 to 30, contact points/cm² on the outside or outer sides respectively of the conveyor belt (5).

7. Conveyor belt in accordance with one of claims 1 to 6, **characterised in that** heat conducting filaments (19, 20) form contact points on the outer sides of the conveyor belt (5) whose surfaces in each case take up 15 to 30% of the respective area of the conveyor belt (5).

8. Belt in accordance with one of claims 1 to 7, **characterised in that** heat conducting filaments (18, 19, 20) consist at least partially of metals, e.g. copper, brass, aluminium and silver or of alloys thereof, of carbon and/or of combinations of metal and carbon.

9. Conveyor belt in accordance with one of claims 1 to 8, **characterised in that** heat conducting filaments (18) have a core filament (23) which is wrapped in at least one wire (24) or tape or around which wires or tapes are bound which consist of a material whose specific conductivity is greater than that of the core filament (23).

10. Conveyor belt in accordance with one of claims 1 to 9, **characterised in that** the strap (17) consists of heat conducting filaments (18, 19, 20).

11. Conveyor belt in accordance with one of claims 1 to 10, **characterised in that**, in addition to the heat conducing filaments there are other filaments whose specific heat conductivity is smaller than that of the heat conducting filaments.

12. Conveyor belt in accordance with claim 11, **characterised in that** the additional filaments form plastic filaments, which have a heat resistance of at least 200° C.

13. Conveyor belt in accordance with one of claims 1 to 12, **characterised in that** the filaments (18, 19, 20) are formed as monofilaments, multifilaments, braided filaments, fibrous threads, braids, cables, tapes, yarns, textured threads and/or bound threads.

14. Conveyor belt in accordance with one of claims 1 to 13, **characterised in that** the strap (17) is formed as a fabric, knitted fabric, bonded fabric, three-dimensional fabric or knitted fabric.

15. Conveyor belt in accordance with one of claims 1 to 14, **characterised in that** the strap (17) is formed as a fabric in which weft threads (18) essentially run straight and the warp threads (19, 20) form outward projecting shoulders (21) and the warp threads (19, 20) are formed at least in part of heat conducting filaments.

16. Conveyor belt in accordance with claim 15, **characterised in that** the weft threads (18) are present in at least one layer.

17. Conveyor belt in accordance with one of claims 1 to 16, **characterised in that** heat conducting particles whose specific heat conductivity is greater than that of the plastic material are distributed in the matrix (22).

18. Conveyor belt in accordance with claim 17, **characterised in that** the heat conducting particles are formed as powder and/or as fibres.

19. Conveyor belt in accordance with one of claims 1 to 18, **characterised in that** filler materials whose specific weight is lower than that of the plastic material are distributed in the matrix (22).

20. Conveyor belt in accordance with claim 19, **characterised in that** the filler materials consist of gas bubbles, powder and/or micro-pellets.

21. Conveyor belt in accordance with one of claims 19 to 20, **characterised in that** the proportion of filler materials present if applicable and the heat conducting particles present if appropriate makes up 10 to 60% by weight of the weight of the matrix (17) [sic].

22. Conveyor belt in accordance with one of claims 1 to 21, **characterised in that** the plastic material is resistant up to at least 200° C.

23. Conveyor belt in accordance with one of claims 1 to 22, **characterised in that** the plastic material is an elastomer.

24. Conveyor belt in accordance with claim 23, **characterised in that** the elastomer is a silicon elastomer, fluorine elastomer and/or fluorine silicone elastomer.

25. Conveyor belt in accordance with one of claims 1 to 24, **characterised in that** the plastic material is a resin.

26. Conveyor belt in accordance with claim 25, **characterised in that** the resin is a silicon resin, fluorine silicon resin, polyurethane resin or an elastic polyacrylate.

27. Conveyor belt in accordance with one of claims 1 to 26, **characterised in that** the matrix (22) fills the strap (17) completely.

28. Conveyor belt in accordance with one of claims 1 to 27, **characterised in that** the matrix (22) forms 15 to 40% by weight, preferably 20 to 30% by weight, of the conveyor belt (5).

29. Conveyor belt in accordance with one of claims 1 to 28, **characterised in that** the thickness of the conveyor belt amounts to 0.75 to 3 mm.

30. Conveyor belt in accordance with one of claims 1 to 29, **characterised in that** the conveyor belt (5) is divided in at least one place by the formation of leading edges and the leading edges can be joined together via a coupling device (7).

31. Conveyor belt in accordance with claim 30, **characterised in that** the coupling device (7) is formed as a straight wire rod seam.

32. Cooling device (1) with a conveyor belt, in which the cooling device (1) has a cooling plant in the area of the circulating conveyor belt (5), for its cooling, **characterised in that** the conveyor belt is designed in accordance with one of claims 1 to 30.

33. Cooling device in accordance with claim 32, **characterised in that** the cooling equipment has a cooling roller over which the conveyor belt is fed and which can be cooled by a coolant.

34. Heating device with a conveyor belt in which the heating device has a heating plant in the area of the circulating conveyor belt (5), for its heating, **characterised in that** the conveyor belt is designed in accordance with one of claims 1 to 31.

35. Heating device in accordance with claim 34, **characterised in that** the heating plant has an induction coil.

36. Heating device in accordance with claim 35, **characterised in that** the heating plant has an infrared heating element.

37. Process for manufacturing products (15), in which the product material (14) liquefies and is deposited on a conveyor belt (5) and then removed from this as a product (15) by a feed device (11), **characterised in that** the product material (14) is deposited on a conveyor belt (5) in accordance with one of claims 1 to 31.

38. Process in accordance with claim 37, **characterised in that** the product material (14) is deposited in individual portions.

39. Process in accordance with claim 37, **characterised in that** the product material is deposited in rod form.

40. Process in accordance with claim 37, **characterised in that** the product material is deposited in sheet form.

41. Process in accordance with claim 40, **characterised in that** the product is removed from the conveyor belt (5) as a foil and either rolled up or relayed to a subsequent stage.

## Revendications

1. Bande convoyeuse (5) agissant en tant que dispositif de refroidissement ou de chauffage (1), ou destinée à un tel dispositif, ladite bande convoyeuse (5) présentant un support textile (17) muni de fils parmi lesquels au moins une partie forme des fils thermoconducteurs (18, 19, 20), **caractérisée par le fait que** ledit support est noyé dans une matrice (22) en une matière plastique, de façon telle que des fils thermoconducteurs (19, 20) gagnent au moins la surface de ladite matrice (22), sur au moins une face extérieure, la conductivité thermique spécifique desdits fils thermoconducteurs (19, 20) étant plus élevée que celle de la matière plastique.

2. Bande convoyeuse selon la revendication 1, **caractérisée par le fait que** des fils thermoconducteurs (19, 20) gagnent les surfaces sur les deux faces extérieures et provoquent, soit directement, soit par l'intermédiaire d'un contact avec d'autres fils thermoconducteurs (18), un transfert thermique depuis une face extérieure de ladite bande convoyeuse (5) jusqu'à l'autre face extérieure.

3. Bande convoyeuse selon la revendication 1 ou 2, **caractérisée par le fait que** les fils thermoconducteurs (19, 20), qui gagnent respectivement la ou les surface(s) de la matrice (22), se trouvent dans l'affleurement de la surface considérée.

4. Bande convoyeuse selon la revendication 1 ou 2, **caractérisée par le fait que** l'épaisseur de la matrice (22) est moindre que celle du support (17) ; et **par le fait que** des fils thermoconducteurs (19, 20) font saillie au-delà de ladite matrice (22) sur au moins une face extérieure.

5. Bande convoyeuse selon l'une des revendications 1 à 4, **caractérisée par le fait que** des fils thermoconducteurs (19, 20) alternent entre les faces extérieures de ladite bande convoyeuse (5).

6. Bande convoyeuse selon l'une des revendications 1 à 5, **caractérisée par le fait que** des fils thermoconducteurs (19, 20) forment jusqu'à 40, de préférence de 15 à 30 points de contact/cm² sur la ou les face(s) extérieure(s) de ladite bande convoyeuse (5).

7. Bande convoyeuse selon l'une des revendications 1 à 6, **caractérisée par le fait que** des fils thermoconducteurs (19, 20) forment, sur les faces extérieures de ladite bande convoyeuse (5), des points de contact dont les surfaces occupent respectivement de 15 à 30 % de la surface considérée de ladite bande convoyeuse (5).

8. Bande selon l'une des revendications 1 à 7, **caractérisée par le fait que** des fils thermoconducteurs (18, 19, 20) consistent au moins partiellement en des métaux, par exemple du cuivre, du laiton, de l'aluminium, de l'argent ou des alliages de ces derniers, en du carbone et/ou en des combinaisons d'un métal et de carbone.

9. Bande convoyeuse selon l'une des revendications 1 à 8, **caractérisée par le fait que** des fils thermoconducteurs (18) comportent un fil de noyau (23) qui est enlacé par au moins un fil métallique (24) ou une bandelette, ou bien autour duquel sont câblé(e)s des fils métalliques ou des bandelettes consistant en un matériau dont la conductivité thermique spécifique est supérieure à celle dudit fil de noyau (23).

10. Bande convoyeuse selon l'une des revendications 1 à 9, **caractérisée par le fait que** le support (17) est constitué par des fils thermoconducteurs (18, 19, 20).

11. Bande convoyeuse selon l'une des revendications 1 à 10, **caractérisée par** la présence, en plus des fils thermoconducteurs, de fils supplémentaires dont la conductivité thermique spécifique est inférieure à celle desdits fils thermoconducteurs.

12. Bande convoyeuse selon la revendication 11, **caractérisée par le fait que** les fils supplémentaires forment des fils en matière plastique possédant une constance thermique d'au moins 200°C.

13. Bande convoyeuse selon l'une des revendications 1 à 12, **caractérisée par le fait que** les fils (18, 19, 20) se présentent comme des monofils, des multifils, des fils tressés, des filés fibreux, des torons, des câbles, des bandelettes, des retors, des filés texturés et/ou des filés liés.

14. Bande convoyeuse selon l'une des revendications 1 à 13, **caractérisée par le fait que** le support (17) se présente comme un tissu, un tissu maillé, un tricot, une structure plane en des fils, un tissu ou un tricot aéré.

15. Bande convoyeuse selon l'une des revendications 1 à 14, **caractérisée par le fait que** le support (17) est conçu sous la forme d'un tissu dans lequel des fils de trame (18) s'étendent pour l'essentiel rectilignement et les fils de chaîne (19, 20) forment des coudes (21) saillant extérieurement, et lesdits fils de chaîne (19, 20) sont au moins partiellement réalisés sous la forme de fils thermoconducteurs.

16. Bande convoyeuse selon la revendication 15, **caractérisée par le fait que** les fils de trame (18) se présentent en au moins une couche.

17. Bande convoyeuse selon l'une des revendications 1 à 16, **caractérisée par le fait que** des particules thermoconductrices sont réparties dans la matrice (22), la conductivité thermique spécifique desdites particules étant supérieure à celle de la matière plastique.

18. Bande convoyeuse selon la revendication 17, **caractérisée par le fait que** les particules thermoconductrices se présentent comme une poudre et/ou comme des fibres.

19. Bande convoyeuse selon l'une des revendications 1 à 18, **caractérisée par le fait que** des substances de charge sont réparties dans la matrice (22), le poids spécifique desdites substances étant inférieur à celui de la matière plastique.

20. Bande convoyeuse selon la revendication 19, **caractérisée par le fait que** les substances de charge sont constituées par des soufflures de verre, par une poudre et/ou par des microbilles.

21. Bande convoyeuse selon l'une des revendications 19 à 20, **caractérisée par le fait que** la part en substances de charge éventuellement présentes, et en particules thermoconductrices éventuellement présentes, représente de 10 à 60 % du poids de la matrice (22).

22. Bande convoyeuse selon l'une des revendications 1 à 21, **caractérisée par le fait que** la matière plastique est stable jusqu'à au moins 200°C.

23. Bande convoyeuse selon l'une des revendications 1 à 22, **caractérisée par le fait que** la matière plastique est un élastomère.

24. Bande convoyeuse selon la revendication 23, **caractérisée par le fait que** l'élastomère est un élastomère siliconé, un élastomère fluoré et/ou un élastomère fluoré et siliconé

25. Bande convoyeuse selon l'une des revendications 1 à 24, **caractérisée par le fait que** la matière plastique est une résine.

26. Bande convoyeuse selon la revendication 25, **caractérisée par le fait que** la résine est une résine de silicone, une résine de silicone fluoré, une résine de polyuréthane ou un polyacrylate élastique.

27. Bande convoyeuse selon l'une des revendications 1 à 26, **caractérisée par le fait que** la matrice (22) comble le support (17) sans discontinuités.

28. Bande convoyeuse selon l'une des revendications 1 à 27, **caractérisée par le fait que** la matrice (22) représente de 15 à 40 % du poids de ladite bande convoyeuse (5), de préférence de 20 à 30 % en poids.

29. Bande convoyeuse selon l'une des revendications 1 à 28, **caractérisée par le fait que** l'épaisseur de ladite bande convoyeuse mesure de 0,75 à 3 mm.

30. Bande convoyeuse selon les revendications 1 à 29, **caractérisée par le fait que** ladite bande convoyeuse (5) est scindée en au moins un emplacement, en formant des bords frontaux, et lesdits bords frontaux peuvent être reliés par l'intermédiaire d'un système d'accouplement (7).

31. Bande convoyeuse selon la revendication 30, **caractérisée par le fait que** le système d'accouplement (7) est conçu comme une jonction en fil métallique emboîtable.

32. Dispositif de refroidissement (1) muni d'une bande convoyeuse, ledit dispositif de refroidissement (1) présentant un système de refroidissement dans la région de la bande convoyeuse (5) en révolution, en vue du refroidissement de cette dernière, **caractérisé par le fait que** la bande convoyeuse est réalisée conformément à l'une des revendications 1 à 30.

33. Dispositif de refroidissement selon la revendication 32, **caractérisé par le fait que** le système de refroidissement présente un cylindre refroidisseur par l'intermédiaire duquel la bande convoyeuse est guidée, et qui peut être refroidi par l'intermédiaire d'un agent de refroidissement.

34. Dispositif de chauffage muni d'une bande convoyeuse, ledit dispositif de chauffage présentant un système de chauffage dans la région de la bande convoyeuse en révolution, en vue du chauffage de cette dernière, **caractérisé par le fait que** ladite bande convoyeuse est réalisée conformément à l'une des revendications 1 à 31.

35. Dispositif de chauffage selon la revendication 34, **caractérisé par le fait que** le système de chauffage comporte une bobine à induction.

36. Dispositif de chauffage selon la revendication 35, **caractérisé par le fait que** le système de chauffage comporte un diffuseur d'infrarouges.

37. Procédé de fabrication de produits (15), dans lequel un matériau de production (14) est liquéfié, est déposé sur une bande convoyeuse (5) au moyen d'un système applicateur (11), et est ensuite enlevé de ladite bande, en tant que produit (15), **caractérisé par le fait que** le matériau de production (14) est déposé sur une bande convoyeuse (5) selon l'une des revendications 1 à 31.

38. Procédé selon la revendication 37, **caractérisé par le fait que** le matériau de production (14) est déposé en des portions dissociées.

39. Procédé selon la revendication 37, **caractérisé par le fait que** le matériau de production est déposé sous la forme d'un boudin continu.

40. Procédé selon la revendication 37, **caractérisé par le fait que** le matériau de production est déposé sous la forme d'une couche.

41. Procédé selon la revendication 40, **caractérisé par le fait que** le produit est enlevé de la bande convoyeuse (5) sous la forme d'une feuille et est soit bobiné, soit transféré à un autre poste.
